# FASCICULE DE BREVET EUROPEEN

(11) **EP 2 707 589 B1**
(45) Date de publication et mention de la délivrance du brevet: **07.03.2018**
(21) Numéro de dépôt: 12728664.9
(22) Date de dépôt: 11.05.2012
(51) Int. Cl.: F02K 1/34, F02K 3/06

(54) **CÔNE ARRIÈRE DE TURBORÉACTEUR TOURNANT A MICRO-JETS**
HECKKONUS FÜR EINEN MIKROSTRAHL-ROTATIONSTURBINENMOTOR
TAIL CONE FOR A MICROJET ROTARY TURBINE ENGINE

(30) Priorité: 12.05.2011 FR 1154126
(43) Date de publication de la demande: 19.03.2014
(73) Titulaire: Safran Aircraft Engines, 75015 Paris (FR); Centre National de la Recherche Scientifique (C.N.R.S.), 75794 Paris Cedex 16 (FR); Université De Poitiers, 86034 Poitiers Cedex (FR); Ensma, 86961 Futuroscope Chasseneuil (FR)
(72) Inventeur: VUILLEMIN, Alexandre, Alfred, Gaston, F-77550 Moissy-Cramayel Cedex (FR); KOENIG, Maxime, F-77550 Moissy-Cramayel Cedex (FR); JORDAN, Peter, F-79120 Rom (FR); GERVAIS, Yves, F-86000 Poitiers (FR)
(74) Mandataire: Gevers & Orès
(86) Numéro de dépôt international: PCT/FR2012/051054
(87) Numéro de publication internationale: WO 2012/153074

(56) Documents cités:
- EP-A2- 1 464 822
- EP-A2- 1 533 510
- WO-A1-2007/122368
- WO-A1-2008/045090
- FR-A1- 2 241 695
- FR-A1- 2 923 270
- GB-A- 2 372 779
- US-A- 2 586 054
- US-A- 3 938 742
- US-A- 4 240 519
- US-A1- 2004 237 501
- US-A1- 2008 302 083

## Description

Le domaine de la présente invention est celui des turbomachines et plus particulièrement celui des dispositifs de réduction du bruit émis par ces turbomachines.
Les avions commerciaux sont généralement équipés de turboréacteurs à double flux, qui sont constitués d'une turbine à gaz entraînant une soufflante carénée, celle-ci étant généralement placée à l'amont du moteur. La masse d'air aspirée par le moteur est divisée en un flux primaire, qui circule dans la turbine à gaz ou corps primaire, et un flux secondaire, qui est issu de la soufflante, les deux flux étant concentriques. Le flux primaire sort de la soufflante pour passer dans le corps primaire où il est comprimé à nouveau, chauffé dans une chambre de combustion, guidé vers des étages successifs de turbines puis éjecté en un flux gazeux primaire. Le flux secondaire est comprimé par l'étage de soufflante carénée, puis éjecté directement sans avoir été chauffé. Les deux flux peuvent être éjectés séparément en deux flux concentriques ou bien mélangés dans un même canal avant éjection.
Le turboréacteur est classiquement logé dans une nacelle qui est conformée de manière à rendre la traînée aérodynamique aussi faible que possible ; elle comprend une première partie, à l'amont, qui enveloppe la soufflante et une deuxième partie, à l'aval, qui forme une carène pour guider le flux secondaire. Le flux primaire est, dans sa partie aval, guidé entre un capot du moteur, dit capot primaire, et un carter conique qui referme le moteur à l'arrière et qui est généralement dénommé cône arrière. La carène de la nacelle constitue avec le capot primaire une tuyère d'éjection pour le flux secondaire, alors que le capot primaire constitue avec le cône arrière une tuyère d'éjection pour le flux primaire.
La réduction du bruit causé par le jet des turboréacteurs est une préoccupation constante des avionneurs et des motoristes et différentes solutions ont été proposées dans ce but.

L'un des moyens actuels mis en oeuvre est d'utiliser des chevrons qui sont installés sur la tuyère primaire du moteur. Cette technologie est actuellement employée essentiellement sur des moteurs à flux séparés. Mais, si elle est assez efficace sur le plan acoustique, elle a cependant un effet négatif sur les performances en croisière.
Une autre solution envisagée par les industriels consiste en l'implémentation de micro-jets sur les capots entourant le flux primaire et / ou le flux secondaire. Ces micro-jets sont répartis circulairement en azimut sur les capots et injectent de l'air dans le jet correspondant, suivant divers angles d'incidence et de dérapage. Il est connu du document US-A-258604 des viroles qui portent chacune une hélice et qui sont agencées en aval d'une turbomachine. Caque virole comprend une double paroi entre laquelle circule un flux d'air de refroidissement et débouchant vers l'extérieur via une performation de sorte refroidir les parois des viroles. Ces perforations agencées chacune sur une virole sont disposées suivant l'axe de la turbomachine et ne sont pas disposées en azimut. Cependant, les études menées sur différents dispositifs ont montré que les gains acoustiques susceptibles d'être obtenus par les systèmes de contrôle de cette nature restent limités, ce que l'on peut attribuer au manque de capacité d'action de ce mode de contrôle par jets externes dans les zones de production acoustique, en l'occurrence à l'aval des tuyères d'éjection. En effet, avec des dispositifs localisés à l'extérieur du jet, notamment au niveau de la lèvre extérieure de la tuyère primaire, les perturbations introduites sont rapidement assimilées par la turbulence de la couche où se produit le mélange des deux flux. L'impact de ces perturbations sur le développement de la turbulence relève alors plus d'une modification des conditions initiales de la couche de mélange plutôt que d'une action directe sur les zones aval de l'écoulement, là où se trouvent localisées les principales sources de bruit.

La présente invention a pour but de remédier à ces inconvénients en proposant un nouveau dispositif de réduction du bruit de jet des turboréacteurs, qui soit plus performant que les dispositifs actuels et qui ne dégrade pas les performances de ces turboréacteurs en croisière, que ce soit en poussée ou en consommation spécifique.

A cet effet, l'invention a pour objet un carter arrière pour un turboréacteur comportant un corps primaire générant un flux primaire destiné à être éjecté par une tuyère primaire, ledit carter arrière étant conformé pour être positionné à l'aval dudit corps primaire et délimiter, du côté interne au turboréacteur, le cheminement suivi par ledit flux primaire en aval de la tuyère primaire, caractérisé en ce qu'il comporte un raccordement à un système d'alimentation en un gaz sous pression et au moins une perforation destinée à l'injection de ce gaz sous pression, à travers cette perforation, dans ledit flux primaire.
La présence d'une perforation sur le cône arrière du carter permet, par une modulation des conditions d'injection d'un gaz sous pression par rapport à la pression statique régnant dans le flux primaire, de créer un phénomène d'écoulement instationnaire le long du cône arrière qui se perpétue sur toute la longueur de ce cône et au-delà, et ainsi de réduire le bruit de jet généré par le flux primaire.
Avantageusement, la perforation est conformée pour que le jet la traversant fasse un angle compris entre 20 et 90° avec la direction du flux primaire. Cette orientation vise à faire pénétrer le jet le plus possible à l'intérieur du flux primaire et à mieux générer le phénomène instationnaire.
Dans un mode particulier de réalisation, la perforation est conformée pour que le jet soit injecté perpendiculairement à la surface dudit carter.
Préférentiellement le carter comporte un nombre de perforations compris entre 2 et 8, lesdites perforations étant réparties régulièrement sur sa circonférence. Un nombre minimum de deux permet de garder une symétrie dans la configuration adoptée et de réduire les facteurs générateurs de vibrations, alors qu'un nombre trop élevé de perforations présente, à diamètre des perforations et vitesse d'injection équivalentes, l'inconvénient d'un taux de prélèvement d'air trop important.
Dans un mode particulier de réalisation, le carter comporte au moins un moyen pour sa mise en rotation autour de l'axe de rotation des éléments mobiles dudit corps primaire.
La mise en rotation crée un phénomène instationnaire du fait de l'alternance, dans un plan donné, d'une perturbation due au passage du jet et d'une période de calme qui dure jusqu'au passage de la perforation suivante dans ce plan.

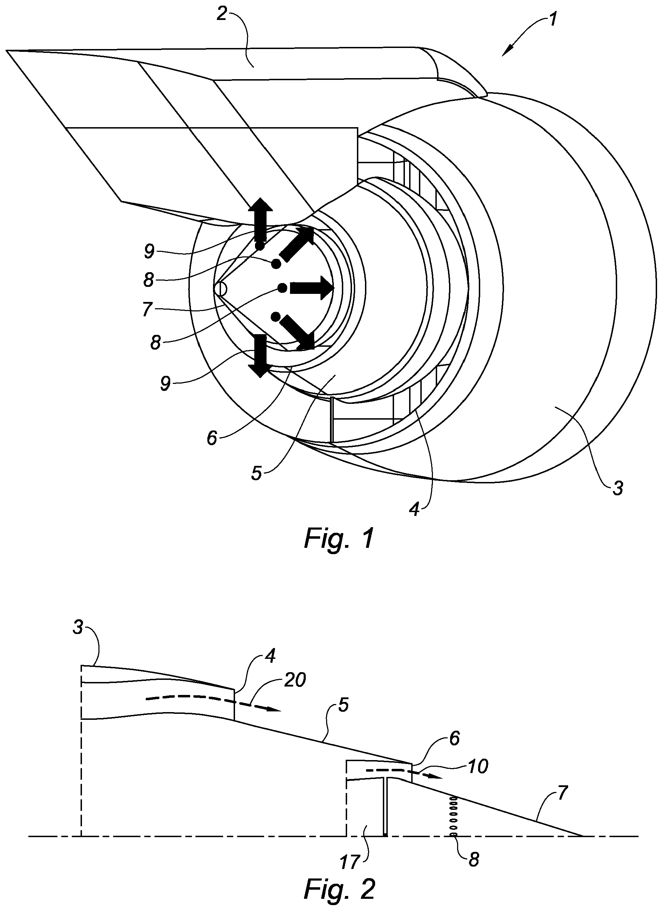

L'invention porte également sur un ensemble constitué d'un carter selon la revendication 1. et d'un système d'alimentation, selon la revendication 5, en gaz sous pression dans lequel le système d'alimentation est dimensionné pour fournir à chaque perforation un débit inférieur ou égal à 0,25% du débit du flux primaire.
Dans un mode particulier de réalisation la section de la perforation et le système d'alimentation sont dimensionnés de façon que le jet ait une vitesse, au plus, sonique lors de son passage au travers de ladite perforation.
Dans un mode particulier de réalisation, le carter comporte au moins un moyen pour sa mise en rotation autour de l'axe de rotation des éléments mobiles dudit corps primaire et le système d'alimentation en gaz sous pression délivre une pression constante.
Dans un autre mode de réalisation, le carter comporte des moyens d'attache pour sa fixation immobile sur ledit corps primaire et la pression délivrée par le système d'alimentation est modulée en fonction du temps.
L'invention porte enfin sur un turboréacteur équipé d'un ensemble tel que décrit ci-dessus.
L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
Sur ces dessins :
- la figure 1 est une vue en perspective, depuis l'arrière, d'un turboréacteur double flux équipé d'un dispositif de réduction de bruit selon un mode de réalisation de l'invention ;
- la figure 2 est une vue schématique en coupe du moteur de la figure 1, et
- la figure 3 est une vue schématique, en coupe, de la partie arrière du corps primaire du turboréacteur de la figure 1.
En se référant à la figure 1, on voit un turboréacteur 1, à double flux et fort taux de dilution, monté sur le pylône 2 d'un aéronef (non représenté). Le réacteur 1 comprend une nacelle 3, dont la partie avant entoure la soufflante et dont la partie arrière forme la tuyère d'éjection 4 du flux secondaire. Le corps primaire du turboréacteur est enfermé dans une succession de carters se terminant à l'aval par le capot primaire 5 qui sépare les flux primaire et secondaire. Du côté interne le flux primaire est canalisé par le cône arrière 7 qui forme, avec le capot primaire 5 la tuyère d'éjection 6 du flux primaire. Le cône arrière 7 est percé d'une série de perforations 8 réparties régulièrement sur sa périphérie, en aval de la tuyère d'éjection primaire 6. Ces perforations 8, qui ont pour objet l'injection de micro-jets 9 d'air sous pression dans le flux primaire, sont orientées de façon à assurer cette injection dans un plan radial, en référence à l'axe de rotation de la turbomachine 1. Bien que cela n'apparaisse pas sur la figure 1 le cône arrière est animé d'un mouvement de rotation autour de l'axe de rotation de la turbomachine, de sorte que la direction des micro-jets 9 est constamment modifiée
La figure 2 montre l'arrière-corps du turboréacteur 1. L'extrémité aval de la nacelle 3 et le capot primaire 5, tous deux de forme cylindrique, canalisent le flux secondaire 20, alors que le flux primaire 10 est canalisé par la face interne du capot primaire 5 et par le cône arrière 7. Sur cette figure apparaissent également des perforations 8 pratiquées dans la paroi externe du cône arrière 7, qui sont alimentées en air sous pression par un système d'alimentation non représenté. Le cône arrière 7 est attaché, de façon mobile en rotation, à un carter interne 17 qui termine le corps primaire à sa partie aval.

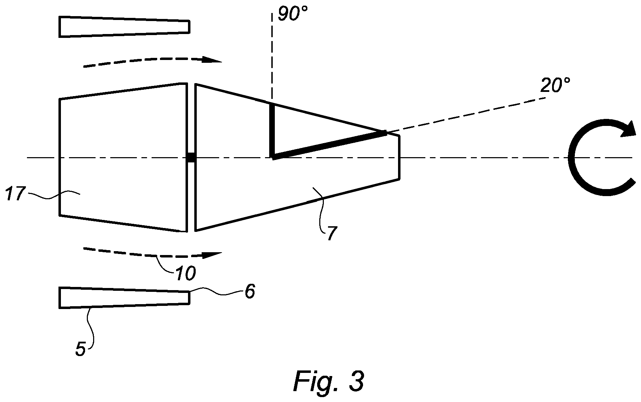

La figure 3 montre de façon détaillée la partie la plus aval du moteur, avec le flux primaire 10 qui est canalisé entre le capot primaire 5 et le carter interne 17. Sur ce carter interne 17, fixe, est monté de façon tournante le cône arrière 7 à l'aide de moyens de mise en rotation tels que des engrenages, des roulements et des paliers, non représentés. Un dispositif, non représenté, de commande de la mise en rotation du cône arrière par rapport au carter interne 17 est également prévu. Ce dispositif de mise en rotation peut, par exemple, être réalisé par un système réducteur à partir d'un des arbres de turbine du turboréacteur.

La figure 3 montre également deux orientations possibles pour les micro-jets 9 qui sont injectés dans le flux primaire en aval de la tuyère d'éjection primaire 6. Dans le premier cas les micro-jets sont orientés radialement, en référence à l'axe de rotation de la turbomachine et dans le second cas leur direction fait un angle de 20° avec cet axe de rotation. D'autres angles d'injection entre ces deux valeurs sont également possibles. Dans tous les cas les jets sont injectés avec une direction et une quantité de mouvement telles qu'ils pénètrent profondément à l'intérieur du flux primaire et ne se répandent pas en se mélangeant immédiatement à ce flux pour s'écouler le long de la paroi du cône 7.

On va maintenant décrire le fonctionnement du dispositif, selon l'invention, de réduction du bruit d'un turboréacteur.
La technologie proposée consiste principalement à mettre en rotation une partie du corps central, en l'occurrence le cône arrière 7, et à l'équiper de deux ou plusieurs jets d'air comprimé, qui sont répartis en azimut sur la périphérie du cône et qui débitent cet air de façon continue. Le mouvement de rotation continu des jets introduit ainsi une composante instationnaire dans le jet, du fait que dans un plan même radial se succèdent chronologiquement le passage d'un jet puis des instants sans perturbation. La dynamique obtenue de l'écoulement est alors plus proche de celle d'un sillage que de celle d'une couche de mélange. On peut ainsi s'attendre à ce que ces perturbations introduites dans l'écoulement ne soient pas assimilées trop rapidement par la turbulence de la couche de mélange et qu'elles conservent leur caractère cohérent sur une étendue axiale importante, voire jusqu'à l'extrémité du cône potentiel.
Le dispositif proposé se caractérise en outre par sa grande simplicité :
- sa mise au point est relativement simple puisqu'il ne met en jeu qu'un nombre limité de paramètres, tels que le nombre et la position des perforations 8, le débit des jets et la vitesse de rotation à donner au cône arrière 7.
- il n'y a pas de pièce mécanique susceptible d'être mise en vibration, ce qui améliore de fait la fiabilité du dispositif,
- il ne nécessite qu'une faible consommation énergétique, du fait de la faible masse mise en mouvement,
- il ne nécessite l'ajout que de très peu de pièces, ce qui réduit le surcroît de masse embarquée,
- il est implanté en extrémité du corps central du moteur, à un endroit où il existe de la place non utilisée, le cône arrière étant généralement vide dans l'art antérieur,
- il ne nécessite pas de modification de la forme du corps central, et donc n'induit pas de perte aérodynamique.
Dans un mode préféré de réalisation, le dispositif est conçu avec les paramètres particuliers suivants :
- le nombre de perforations 8 effectuant une injection d'air comprimé varie entre 2 à 8 suivant le diamètre du cône 7. Les micro-jets 9 issus de ces perforations sont espacés régulièrement en azimut, de façon à préserver la symétrie de la géométrie de l'arrière-corps du turboréacteur. Ce respect de la symétrie permet de s'affranchir d'une partie des problèmes de vibration qui peuvent apparaître sur des structures en rotation.
- l'angle de pénétration des micro-jets dans le flux primaire peut, comme indiqué sur la figure 3, varier entre 20° et 90°, par rapport à l'axe du jet suivant le cas de figure envisagé. Les jets peuvent, en particulier, être orientés perpendiculairement à la paroi du cône arrière 7.
- le débit des micro-jets 9 est défini comme un pourcentage du débit du flux primaire, ce qui permet d'adapter l'invention à la taille des différents turboréacteurs existants. Après expérimentation il apparaît que ces jets restent efficaces avec un débit qui ne dépasse pas, par perforation 8, le pourcentage de 0,25% du jet primaire. En conséquence, même si le cône 7 est équipé de 8 perforations, le débit injecté par ces perforations, et qui est prélevé sur l'air en sortie du compresseur, n'excédera pas 2% du débit du jet primaire. Une telle valeur de prélèvement reste compatible avec un bon fonctionnement du moteur, en ne dégradant pas de façon excessive ses performances en poussée au décollage. Hors des phases de décollage, et notamment en croisière, là où les problèmes de bruit généré par le turboréacteur sont moins sensibles, il est prévu de mettre le dispositif de réduction du bruit hors service pour ne pas pénaliser le rendement thermodynamique ou les performances du réacteur comme c'était le cas dans les systèmes de l'art antérieur.

- la pression au sein du système d'injection qui alimente les micro-jets peut être fixée à une valeur telle que la vitesse de l'air des micro-jets soit au maximum sonique au passage des perforations 8.
- la taille des perforations 8 peut varier, selon le nombre de perforations 8 qui sont implantées sur le cône 7 et la pression d'injection retenue, de 0,01 m à 0,05 m en diamètre.
- la vitesse de rotation donnée au cône 7 est fonction de sa taille et donc, de celle du moteur sur lequel il est monté. A titre d'exemple, sur un turboréacteur dont le diamètre du capot primaire 5 est de 0, 76 m, le cône 7 a un diamètre de 0,30 à sa partie la plus large et est entraîné à une vitesse de 11 000 t/min.

Le dispositif selon l'invention a été décrit avec une injection d'air comprimé continue à partir d'un cône mis en rotation, ce qui a pour effet de créer une injection fluidique instationnaire dans le flux primaire 10, dont l'origine est placée au centre de ce flux primaire. Le caractère instationnaire provient, comme déjà indiqué plus haut, de l'alternance, dans un plan donné, d'une perturbation due au passage du jet 9 et d'une période de calme qui dure jusqu'au passage de la perforation 8 suivante dans ce plan. D'autres dispositifs qui assurent la même fonction peuvent être imaginés, qui entrent, eux aussi, dans le cadre de la présente invention.
A titre d'exemple cette injection instationnaire pourrait être obtenue à partir de couronnes tournantes, non attachées à un cône 7 fixe, mais porteuses d'injecteurs d'air comprimé, ce qui produirait le même effet. Elle pourrait encore être obtenue à partir d'injecteurs fixes portés par un cône arrière 7 immobile, en organisant une modulation pulsée de la pression appliquée à l'air qui traverse les perforations 8. Les modulations de la pression créeraient alors l'instationnarité recherchée et la dynamique dans le flux primaire qui est génératrice d'une réduction du bruit.

## Revendications

1. Carter arrière pour un turboréacteur, ledit turboréacteur comportant un corps primaire générant un flux primaire (10) destiné à être éjecté par une tuyère primaire (6), ledit carter arrière (7) étant conformé pour être positionné à l'aval dudit corps primaire et délimiter, du côté interne au turboréacteur, le cheminement suivi par ledit flux primaire en aval de la tuyère primaire (6), ledit carter arrière comportant un raccordement à un système d'alimentation en un gaz sous pression et au moins un moyen pour la mise en rotation du carter arrière autour de l'axe de rotation des éléments mobiles dudit corps primaire, **caractérisé en ce que** le carter arrière comporte deux ou plusieurs perforations destinées à l'injection de ce gaz sous pression, à travers ces perforations, dans ledit flux primaire, et réparties régulièrement en azimut sur la périphérie du carter arrière.

2. Carter selon la revendication 1 dans lequel les perforations (8) sont conformées pour que le jet (9) la traversant fasse un angle compris entre 20 et 90° avec la direction du flux primaire (10).

3. Carter selon la revendication 2 dans lequel les perforations (8) sont conformées pour que le jet (9) soit injecté perpendiculairement à la surface dudit carter.

4. Carter selon l'une des revendications 1 à 3 dans lequel le nombre de perforations (8) est compris entre 2 et 8, lesdites perforations étant réparties régulièrement sur sa circonférence.

5. Ensemble constitué d'un carter arrière (7) selon l'une des revendications 1 à 4 et d'un système d'alimentation en gaz sous pression dans lequel le système d'alimentation est dimensionné pour fournir à chaque perforation (8) un débit inférieur ou égal à 0,25% du débit du flux primaire.

6. Ensemble selon la revendication 5 dans lequel la section de chaque perforation (8) et le système d'alimentation sont dimensionnés de façon que le jet (9) ait une vitesse, au plus, sonique lors de son passage au travers de ladite perforation.

7. Ensemble constitué d'un carter selon l'une des revendications 1 à 6 et d'un système d'alimentation en gaz sous pression délivrant une pression constante.

8. Turboréacteur équipé d'un ensemble selon l'une des revendications 5 à 7.

## Patentansprüche

1. Hinteres Gehäuse für ein Turbostrahltriebwerk, wobei das Turbostrahltriebwerk einen primären Körper umfasst, welcher einen primären Strom (10) erzeugt, der dazu bestimmt ist, von einer primären Düse (6) ausgestoßen zu werden, wobei das hintere Gehäuse (7) ausgelegt ist, stromabwärts von dem primären Körper positioniert zu werden und auf der Innenseite des Turbostrahltriebwerks den Weg zu begrenzen, den der primäre Strom stromabwärts von der primären Düse (6) duchläuft, wobei das hintere Gehäuse eine Verbindung mit einem Druckgasversorgungssysstem und mindestens ein Mittel zum Versetzen des hinteren Gehäuses in Rotation um eine Rotationsachse mobiler Elemente des primären Körpers umfasst, **dadurch gekennzeichnet, dass** das hintere Gehäuse zwei oder mehr Perforationen umfasst, die dazu bestimmt sind, Druckgas quer durch diese Perforationen in den primären Strom einzuspritzen, und die regelmäßig azimutal auf dem Umfang des hinteren Gehäuses verteilt sind.

2. Gehäuse nach Anspruch 1, wobei die Perforationen (8) derart ausgelegt sind, dass der diese durchquerende Strahl (9) einen Winkel zwischen 20 und 90°C mit der Richtung des primären Stroms (10) bildet.

3. Gehäuse nach Anspruch 2, wobei die Perforationen (8) derart ausgelegt sind, dass der Strahl (9) rechtwinklig zur Oberfläche des Gehäuses eingespritzt wird.

4. Gehäuse nach einem der Ansprüche 1 bis 3, wobei die Anzahl der Perforationen (8) zwischen 2 und 8 liegt, wobei die Perforationen regelmäßig auf seinem Umfang verteilt sind.

5. Einheit, bestehend aus einem hinteren Gehäuse (7) nach einem der Ansprüche 1 bis 4 und aus einem Druckgasversorgungssystem, wobei das Versorgungssystem bemessen ist, um an jede Perforation (8) einen Durchsatz von kleiner oder gleich 0,25 % des Durchsatzes des primären Stroms zu liefern.

6. Einheit nach Anspruch 5, wobei der Querschnitt jeder Perforation (8) und das Versorgungssystem derart bemessen sind, dass der Strahl (9) eine Geschwindigkeit höchstens des Schalls bei seinem Durchgang quer durch die Perforation aufweist.

7. Einheit, bestehend aus einem Gehäuse nach einem der Ansprüche 1 bis 6 und einem Druckgasversorgungssystem, das einen konstanten Druck liefert.

8. Turbostrahltriebwerk, ausgestattet mit einer Einheit nach einem der Ansprüche 5 bis 7.

## Claims

1. Rear casing for a turbo-jet engine, said turbo-jet engine comprising a primary cowl generating a primary flow (10) intended for being ejected by a primary nozzle (6), said rear casing (7) being shaped for being positioned downstream from said primary cowl and defining, on the side internal to the turbo-jet engine, the path followed by said primary flow downstream from the primary nozzle (6), said rear casing comprising a connection to a pressurised gas supply system and at least one means for rotating the rear casing about the axis of rotation of the movable elements of said primary cowl, **characterised in that** the rear casing comprises two or several perforations intended for the injection of this pressurised gas, through these perforations, into said primary flow and distributed evenly in azimuth on the periphery of the rear casing.

2. Casing, according to claim 1, in which the perforations (8) are shaped in order that the jet (9) passing through it forms an angle of between 20 and 90° with the direction of the primary flow (10).

3. Casing, according to claim 2, in which the perforations (8) are shaped in order that the jet (9) is injected perpendicularly to the surface of said casing.

4. Casing, according to any one of claims 1 to 3, in which the number of perforations (8) is between 2 and 8, said perforations being distributed evenly on its circumference.

5. Assembly, consisting of a rear casing (7) according to any one of claims 1 to 4 and a pressurised gas supply system, in which the supply system is sized in order to supply to each perforation (8) an output less than or equal to 0.25% of the output of the primary flow.

6. Assembly, according to claim 5, in which the section of each perforation (8) and the supply system are sized in order that the jet (9) has, at the most, a sonic speed when it passes through said perforation.

7. Assembly consisting of a casing according to any one of claims 1 to 6 and a pressurised gas supply system delivering a constant pressure.

8. Turbo-jet engine provided with an assembly according to any one of claims 5 to 7.
